# EUROPEAN PATENT APPLICATION

(11) **EP 4 559 621 A1**
(43) Date of publication of application: **28.05.2025**
(21) Application number: 22951817.0
(22) Date of filing: 02.12.2022
(51) Int. Cl.: B24B 9/06, B24B 41/00

(54) **BRICK-PUSHING DEVICE AND EDGE-GRINDING MACHINE**

(30) Priority: 19.07.2022 CN 202221865943 U
(71) Applicant: Keda Industrial Group Co., Ltd., Foshan, Guangdong 528313 (CN)
(72) Inventor: HU, Qingqing, Foshan, Guangdong 528313 (CN); SUI, Xudong, Foshan, Guangdong 528313 (CN)
(74) Representative: Cabinet Chaillot
(86) International application number: PCT/CN2022/136294
(87) International publication number: WO 2024/016558

(57) **Abstract**

A brick pushing device includes: a first brick pushing component, on which an adjusting motor and an adjusting base being arranged, a limit block being provided on the adjusting base, the adjusting base being slidably connected on the first brick pushing component, the adjusting motor being fixedly mounted on the first brick pushing component, a driving shaft of the adjusting motor being drivingly connected on the adjusting base; and a second brick pushing component, the second brick pushing component being arranged opposite to the first brick pushing component and moving synchronously with the first brick pushing component in the same brick pushing transport direction. The adjusting motor drives the adjusting base to slide to adjust a position of the limit block and constrain a swing angle range of a first swing arm of the first brick pushing component, so that the first brick pushing component cooperates with the second brick pushing component to push a brick body synchronously and accurately, and it ensures the accuracy of a brick pushing process.

## Description

### FIELD OF THE INVENTION

The invention relates to the technical field of brick pushing, in particular, to a brick pushing device and an edge grinding machine.

### BACKGROUD OF THE INVENTION

In the existing brick pushing devices, such as a chain-conveying brick conveying and pushing mechanism disclosed in the authorization announcement number CN110980250B published on December 24, 2021, when the existing chain-conveying brick conveying and pushing mechanism is in use, the bricks to be conveyed are placed on the top surface of the sliding filter plate or sliding plate, and then a driving motor is employed to drive the chain for moving the push frame to the left and the bricks to the left while being removed from the sliding filter plate, wherein when moving, the gravel on the bricks falls from the blanking hole to ensure the normal pushing of materials.

According to the above working principle, it can be seen that after pushing a brick, a reset is required, which not only reduces the number of bricks pushed at one time, but also requires the resetting process of the pushing plate, so that the cycle of brick pushing is long, the frequency of brick pushing is low, and further low overall efficiency is caused.

### SUMMARY OF THE INVENTION

In order to overcome at least one drawback described in the above prior art, the invention provides a brick pushing device and an edge grinding machine, which not only increase the frequency of brick pushing and the number of bricks pushed in a single push, but also ensures the accuracy of the brick pushing process.

The technical solution used in the invention to solve the technical problem thereof is as follows:

A brick pushing device, includes:
a first brick pushing component, on which an adjusting motor and an adjusting base are arranged, a limit block being provided on the adjusting base, the adjusting base being slidably connected on the first brick pushing component, the adjusting motor being fixedly mounted on the first brick pushing component, a driving shaft of the adjusting motor being drivingly connected to the adjusting base;
a second brick pushing component, the second brick pushing component being arranged opposite to the first brick pushing component and moving synchronously with the first brick pushing component in the same brick pushing transport direction;
wherein the adjusting motor drives the adjusting base to slide to adjust a position of the limit block and constrain a swing angle range of a first swing arm of the first brick pushing component, so that the first brick pushing component cooperates with the second brick pushing component to push a brick body synchronously and accurately.

Through the cooperative use of the first brick pushing component and the second brick pushing component that are arranged oppositely, the purpose of being able to push the brick body along the same brick pushing transport direction at the same time is achieved, and at the same time, the adjusting motor and the adjusting base equipped with a limit block are configured on the first brick pushing component to limit and constrain the first swing arm of the first brick pushing component, so that the first brick pushing component and the second brick pushing component push the brick body more accurately, thereby achieving the purpose of the brick pushing device to push the bricks synchronously and accurately and increasing the frequency of brick pushing and the quantity of bricks pushed in a single push.

Further, the adjusting base is further provided with a locking fixture, and the locking fixture is connected to the first brick pushing component.

Further, the brick pushing device further includes a first transport mechanism, a second transport mechanism, a transmission shaft and a power device, wherein the first transport mechanism is drivingly connected with the second transport mechanism through the transmission shaft, and the power device is provided at an end of the transmission shaft. The first brick pushing component is slidably connected on the first transport mechanism, and the second brick pushing component is slidably connected on the second transport mechanism.

Further, the first brick pushing component includes a first power cylinder and a first brick pushing base, a cylinder body of the first power cylinder is hinged to the first brick pushing base, and a piston rod of the first power cylinder is hinged to the first swing arm. The first brick-pushing claw is provided on the first swing arm to drive the first power cylinder to perform a telescopic movement, so that the first brick-pushing claw swings and pushes the brick body.

Further, the second brick pushing component includes a second power cylinder, a second brick pushing base, and a second swing arm provided with a second brick-pushing claw, a cylinder body of the second power cylinder is hinged to the second brick pushing base, and a piston rod of the second power cylinder is hinged to the second swing arm to drive the second power cylinder to perform a telescopic movement, so that the second brick-pushing claw swings and pushes the brick body.

Further, one end of the first swing arm is provided with a first hinge end hinged to the piston rod of the first power cylinder, and the first brick-pushing claw is fixedly connected with the other end of the first swing arm. The second hinge end is provided between the first hinge end and the first brick-pushing claw, and the second hinge end is hinged to the first brick pushing base.

Further, one end of the second swing arm is provided with a third hinge end hinged to the piston rod of the second power cylinder, and the second brick-pushing claw is fixedly connected with the other end of the second swing arm, a fourth hinge end is provided between the third hinge end and the second brick-pushing claw, and the fourth hinge end is hinged to the second brick pushing base.

Further, the first transport mechanism includes a first sliding base, a first driving wheel, a first driven wheel, and a first transmission belt. The first driving wheel is connected with the first driven wheel through the first transmission belt, and both the first driving wheel and the first driven wheel are installed on the first sliding base. The first transmission belt is fixedly connected on the first brick pushing base, and the first brick pushing base is slidably connected on the first sliding base. The first driving wheel is connected with the transmission shaft.

Further, the second transport mechanism includes a second sliding base, a second driving wheel, a second driven wheel, and a second transmission belt. The second driving wheel is connected with the second driven wheel through the second transmission belt, and the second driving wheel and the second driven wheel are both assembled on the second sliding base. The second transmission belt is fixedly connected on the second brick pushing base, and the second brick pushing base is slidably connected on the second sliding base. The second driving wheel is connected with the transmission shaft.

The invention further discloses an edge grinder, which includes the above brick pushing device.

In summary, the brick pushing device and the edge grinding machine provided by the invention have the following technical effects:

Utilizing the first brick pushing component equipped with the adjusting motor and the adjusting base, in cooperation of the second brick pushing component, the purpose of synchronously pushing the brick body along the same brick pushing transport direction is achieved, which increases the frequency of brick pushing and the amount of bricks pushed in a single push, and solves the problems that the existing brick pushing device may push a small amount of bricks at one time, has a long cycle of brick pushing and is low in efficiency, while ensuring the accuracy of the bricks during the pushing process of the brick pushing device.

### BRIEF DESCRIPTION OF THE DRAWINGS

Fig. 1 is a top view of a brick pushing device according to the invention;
Fig. 2 is a front view of the brick pushing device according to the invention;
Fig. 3 is a rear view of the brick pushing device according to the invention;
Fig. 4 is a partially enlarged view of A in Fig. 2.

Marks for reference numerals: 1-First brick pushing component, 11-First swing arm, 111-First hinge end, 112-Second hinge end, 12-First power cylinder, 13-First brick pushing base, 14-First brick-pushing claw, 2-Second brick pushing component, 21-Second swing arm, 211-Third hinge end, 212-Fourth hinge end, 22-Second power cylinder, 23-Second brick pushing base, 24-Second brick-pushing claw, 31-Adjusting motor, 32-Adjusting base, 33-Limit block, 34-Locking fixture, 35-Feed nut, 36-Feed screw, 37-Bearing base, 38-Coupling, 41-First transport mechanism, 411-First sliding base, 412-First driving wheel, 413-First driven wheel, 414-First transmission belt, 42-Second transport mechanism, 421-Second sliding base, 422-Second driving wheel, 423-Second driven wheel, 424-Second transmission belt, 43-Transmission shaft, 44-Power device.

### DETAILED DESCRIPTION OF THE INVENTION

For better understanding and implementation, clear and intact description will be made on technical scheme in the embodiment of the present invention below in combination with drawings in the embodiment of the present invention.

In the description of the present invention, it should be noted that orientations or position relationships indicated by terms "upper", "lower", "front", "rear", "left", "right", "vertical", "horizontal", "top", "bottom", "inside", "outside" and the like are orientations or position relationships shown in the drawings, and these terms are merely for facilitating description of the present invention and simplifying the description, but not for indicating or implying that the mentioned device or elements must have a specific orientation and must be established and operated in a specific orientation. Therefore, these terms cannot be understood as a limitation to the present invention.

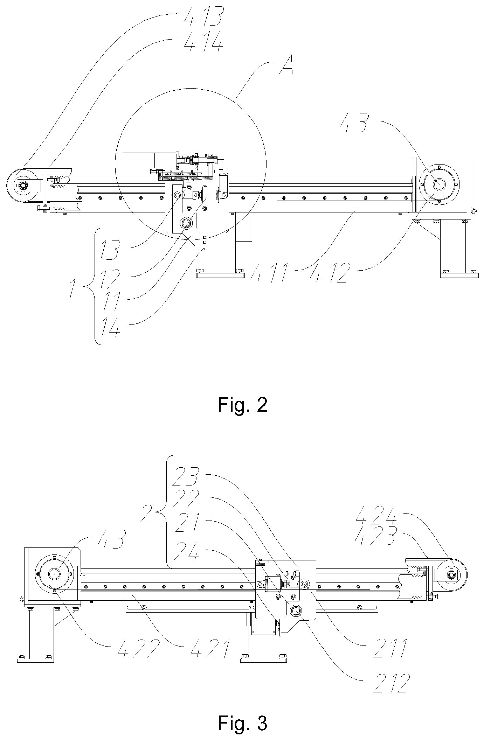

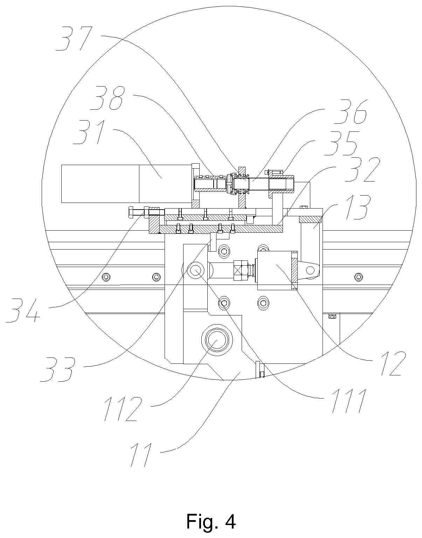

Unless defined otherwise, all technical and scientific terms used herein have the same meaning as commonly understood by those skilled in the technical field of the present invention. The terms used in the description of the present invention herein are only for the purpose of describing specific embodiments and are not intended to limit the present invention. Fig. 2 is a front view of the brick pushing device, and Fig. 4 is a partially enlarged view of A in Fig. 2, wherein in order to more clearly display the structure and connection relationship among an adjusting motor 31 , a first brick pushing component 1 and so on, the construction of a second brick pushing component 2 and a second transport mechanism 42 is removed and hidden. Specifically, in combination with Fig. 2 and Fig. 4, the invention discloses a brick pushing device, which includes:
a first brick pushing component 1, on which an adjusting motor 31 and an adjusting base 32 are arranged, a limit block 33 being provided on the adjusting base 32, the adjusting base 32 being slidably connected on the first brick pushing component 1, the adjusting motor 31 being fixedly mounted on the first brick pushing component 1, a driving shaft of the adjusting motor 31 being drivingly connected on the adjusting base 32;
a second brick pushing component 2, the second brick pushing component 2 being arranged opposite to the first brick pushing component 1 and moving synchronously with the first brick pushing component 1 in the same brick pushing transport direction.

In the embodiment, through the cooperative use of the first brick pushing component 1 and the second brick pushing component 2, a plurality of brick bodies is pushed simultaneously, so that the push amount of a single brick pushing has been doubled, thus effectively increasing the amount of bricks pushed in a single push and frequency of brick pushing.

As the core of the invention, it should not only ensure that the movement of the first brick pushing component 1 and the second brick pushing component 2 in the brick pushing transport direction is synchronized, but also ensure that the first swing arm 11 of the first brick pushing component 1 for swinging and pushing the brick body is synchronized with the second swing arm 21 of the second brick pushing component 2 for pushing the brick body, so that the bricks pushed by the first brick pushing component 1 and the second brick pushing component 2 may simultaneously enter an edge grinding machine for the next process.

Taking the second swing arm 21 as a reference, a swing initial position of the first swing arm 11 is controlled to coincide with a swing initial position of the second swing arm 21 along a vertical projection direction perpendicular to the brick pushing transportation, and a swing end position of the first swing arm 11 is controlled to coincide with an end position of the second swing arm 21 along the vertical projection direction perpendicular to the brick pushing transportation, so that swing speeds of the first swing arm 11 and the second swing arm 21 are the same, and the purpose of synchronously swinging the first swing arm 11 and the second swing arm 21 to push the brick will be achieved, when the first swing arm 11 is not at the same position as the second swing arm 21 along the vertical projection direction perpendicular to the brick pushing transportation, the first swing arm 11 needs to be adjusted; specifically, a feed nut 35 is provided on the adjusting base 32, and a screw of the adjusting motor 31 is in screwed connection with the feed nut 35.

In addition, according to a horizontal adjustment distance between the adjusting base 32 and the first brick pushing component 1, the first brick pushing component 1 is also provided with a bearing base 37, the feed nut 35 is connected with the bearing base 37 through a feed screw 36, and then the feed screw 36 is connected with the driving shaft of the adjusting motor 31 through a coupling 38, so that the purpose of driving connection between the driving shaft of the adjusting motor 31 and the adjusting base 32 is also achieved, thereby driving a linear translation of the limit block 33 on the adjusting base 32.

Therefore, the adjustment principle of limit block 33 is as follows:

The adjusting motor 31 is driven to initiate to rotate the driving shaft/screw of the adjusting motor 31, which is converted into linear movement of the adjusting base 32 and the first brick pushing component 1 via the feed nut 35 and in turn drives a linear translation of the limit block 33 on the adjusting base 32, so that the position of the first swing arm 11 changes when abutting against the limit block 33, thereby changing the initial position of the first swing arm 11. In other words, during the swing of the first swing arm 11, due to the limiting effect of the limit block 33, a swing angle of the first swing arm 11 is adjusted and restricted until the swing initial position of the first swing arm 11 coincides with the swing initial position of the second swing arm 21 along the vertical projection direction perpendicular to the brick pushing transportation.

In summary, the adjusting motor 31 drives the adjusting base 32 to slide, to adjust a position of the limit block 33 and to constrain a swing angle range of the first swing arm 11 of the first brick pushing component 1, so that the first brick pushing component 1 cooperates with the second brick pushing component 2 to push a brick body synchronously and accurately.

It should be noted that the adjusting motor 31 is preferably a servo reduction motor, but not limited to the servo reduction motor.

In the above description, the adjustment of the swing angle range of the first swing arm 11 of the first brick pushing component 1 is completed. Due to the abutment between the first swing arm 11 and the limit block 33, i.e., the first swing arm 11 will collide with the limit block 33 during the swing, thereby generating a vibration force, which will easily cause the position of the limit block 33 to change again and then cause the swing angle range to change again.

To address the above issues, with reference to Fig. 4 for details, the adjusting base 32 is further provided with a locking fixture, and the locking fixture is connected with the first brick pushing component 1.Preferably, the locking fixture includes a locking bolt and a positioning nut which is connected with the locking bolt in a threaded manner, wherein the locking bolt is screwed to the first brick pushing component 1, and an end of the locking bolt abuts against or is screwed to the adjusting base 32.When the position of the limit block 33 is determined, first the locking bolt is unscrewed until the locking bolt abuts against or is screwed to the adjusting base 32; Then, the positioning nut is unscrewed until the positioning nut is tightly attached to the adjusting base 32. Under the action of the positioning nut, the vibration force generated on the adjusting base 32 is prevented from loosening the locking bolt, and further it is ensured that the position between the adjusting base 32 and the first brick pushing component 1 is fixed and no changes in movement occur.

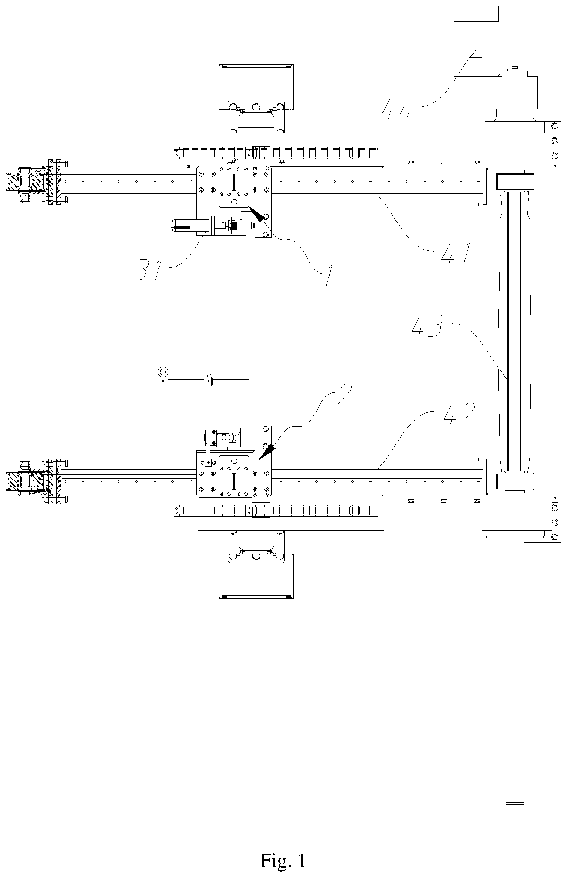

Further, Fig. 1 is a bottom view of the brick pushing device, specifically with reference to Figs. 1 and 2, and the brick pushing device further includes a first transport mechanism 41, a second transport mechanism 42, a transmission shaft 43 and a power device 44, wherein the first transport mechanism 41 is drivingly connected with the second transport mechanism 42 through the transmission shaft 43, and the power device 44 is provided at an end of the transmission shaft 43; the first brick pushing component 1 is slidably connected on the first transport mechanism 41, and the second brick pushing component 2 is slidably connected on the second transport mechanism 42.

In the embodiment, the transmission shaft 43 realizes synchronous transmission of torque and movement between the first transport mechanism 41 and the second transport structure, and the end of the transmission shaft 43 is assembled to the power device 44, so that when the power device 44 is initiated, the transmission shaft 43 will be driven to rotate to further drive the first transport mechanism 41 and the second transport mechanism 42 to move synchronously, thereby achieving the purpose of achieving the purpose of synchronous movement of the first brick pushing component 1 and the second brick pushing component 2 along the same brick pushing transport direction; the power device 44 referred to here is preferably a reduction motor, but not limited to the reduction motor, and any motor that may drive the transmission shaft 43 to rotate may be used as the power device 44.

Specifically, with reference to Figs. 1 and 2, the first brick pushing component 1 includes a first power cylinder 12 and a first brick pushing base 13; a cylinder body of the first power cylinder 12 is hinged to the first brick pushing base 13, and a piston rod of the first power cylinder 12 is hinged to the first swing arm 11; a first brick-pushing claw 14 is provided on the first swing arm 11; it should be noted that the first power cylinder 12 is preferably a pneumatic cylinder, and may also be a hydraulic cylinder or an electric cylinder in addition to the pneumatic cylinder; the first power cylinder 12 is driven to perform a telescopic movement so that the first brick-pushing claw 14 swings and pushes the brick body.

Specifically, with reference to Figs. 2 and 4, one end of the first swing arm 11 is provided with a first hinge end 111 hinged to the piston rod of the first power cylinder 12, and the first brick-pushing claw 14 is fixedly connected with the other end of the first swing arm 11, a second hinge end 112 is provided between the first hinge end 111 and the first brick-pushing claw 14, and the second hinge end 112 is hinged to the first brick pushing base 13.

Thus, the principle of the first swing arm 11 to swing and push the brick body is as follows: the first power cylinder 12 performs a telescopic movement, pulling the end of the first swing arm 11 provided with the first hinge end 111, so that the first swing arm 11 rotates around the second hinge end 112 until the first swing arm 11 is below a surface of the brick body; then, the power device 44 is initiated to cause the first brick pushing component 1 to slide to drive the first brick-pushing claw 14 to push the brick body forward to a designated position, and while the power device 44 is paused, the first power cylinder 12 performs a rod pushing movement to push the first swing arm 11 rotate around the second hinge end 112 until the first swing arm 11 is higher than a height of the brick body; and then, the power device 44 is initiated again to reset or reversely move the first brick pushing component 1 to the designated position, and then the above steps are repeated.

Further, specifically with reference to Figs. 1 and 2, the first transport mechanism 41 includes a first sliding base 411, a first driving wheel 412, a first driven wheel 413, and a first transmission belt 414. The first driving wheel 412 is connected with the first driven wheel 413 through the first transmission belt 414, and the first driving wheel 412 and the first driven wheel 413 are both assembled on the first sliding base 411. The first transmission belt 414 is fixedly connected on the first brick pushing base 13, and the first brick pushing base 13 is slidably connected on the first sliding base 411.and the first driving wheel 412 is connected with the transmission shaft 43.

It should be noted that the first driving wheel 412 and the first driven wheel 413 are preferably belt wheels, and correspondingly the first transmission belt 414 is a flexible belt that is adapted to the first driving wheel 412. The first driving wheel 412 and the first driven wheel 413 may also be optionally synchronous wheels, and correspondingly the first transmission belt 414 is a synchronous belt that is adapted to the first driving wheel 412.

Specifically, Fig. 3 is a rear view of the brick pushing device, wherein, in order to more clearly display the structure and connection relationship between the second brick pushing component 2 and the second transport mechanism 42, the first brick pushing component 1 and the first transport mechanism 41 are removed and hidden. With reference to Figs. 1 and 3, the above second brick pushing component 2 includes a second power cylinder 22, a second brick pushing base 23, and a second swing arm 21 provided with a second brick-pushing claw 24. The cylinder body of the second power cylinder 22 is hinged to the second brick pushing base 23, and a piston rod of the second power cylinder 22 is hinged to the second swing arm 21. It should be noted that the second power cylinder 22 is preferably a pneumatic cylinder, and may also be a hydraulic cylinder or an electric cylinder in addition to the pneumatic cylinder, the second power cylinder 22 is driven to perform a telescopic movement so that the second brick pushing claw 24 swings and pushes the brick body.

With reference to Fig. 3, one end of the second swing arm 21 is provided with a third hinge end 211 hinged to a piston rod of the second power cylinder 22, and the second brick-pushing claw 24 is fixedly connected with the other end of the second swing arm 21, a fourth hinge end 212 is provided between the third hinge end 211 and the second brick-pushing claw 24, and the fourth hinge end 212 is hinged to the second brick pushing base 23.

With reference to the principle of the first swing arm 11 to swing and push the brick body, the principle of the second swing arm 21 to swing and push the brick body is: the second power cylinder 22 performs a telescopic movement, pulling the end of the second swing arm 21 provided with the third hinge end 211, so that the second swing arm 21 rotates around the fourth hinge end 212 until the second swing arm 21 is below the surface of the brick body. Then, the power device 44 is initiated to cause the second brick pushing component 2 to slide to drive the second brick-pushing claw 24 to push the brick body forward to a designated position, and while the power device 44 is paused, the second power cylinder 22 performs a rod pushing movement to push the second swing arm 21 to rotate around the fourth hinge end 212 until the second swing arm 21 is higher than a height of the brick body. At this time, the power device 44 is at this time initiated again to reset or reversely move the second brick pushing component 2 to the designated position, and then the above steps are repeated.

Further, specifically with reference to Fig. 3, the second transport mechanism 42 includes a second sliding base 421, a second driving wheel 422, a second driven wheel 423, and a second transmission belt 424; the second driving wheel 422 is connected with the second driven wheel 423 through the second transmission belt 424, and the second driving wheel 422 and the second driven wheel 423 are both assembled on the second sliding base 421. The second transmission belt 424 is fixedly connected on the second brick pushing base 23, and the second brick pushing base 23 is slidably connected on the second sliding base 421, and the second driving wheel 422 is connected with the transmission shaft 43.

It should be noted that the second driving wheel 422 and the second driven wheel 423 are preferably belt wheels, and correspondingly the second transmission belt 424 is a flexible belt that is adapted to the second driving wheel 422. The second driving wheel 422 and the second driven wheel 423 may also be optionally synchronous wheels, and correspondingly the second transmission belt 424 is a synchronous belt that is adapted to the second driving wheel 422.

Based on the above brick pushing device, the inventor further provides an edge grinding machine, which includes the above brick pushing device. Specifically, the brick pushing device is mounted on the edge grinding machine.

The technical means disclosed in the solution of the invention are not limited to the technical means disclosed in the above embodiments, but also include technical solutions composed of any combination of the above technical features. It should be noted that those skilled in the art may make some improvements and modifications without departing from the principle of the invention. These improvements and modifications should also be regarded as the scope of protection of the invention.

## Claims

1. A brick pushing device, comprising:
a first brick pushing component (1), on which an adjusting motor (31) and an adjusting base (32) are arranged, a limit block (33) being provided on the adjusting base (32), the adjusting base (32) being slidably connected on the first brick pushing component (1), the adjusting motor (31) being fixedly mounted on the first brick pushing component (1), a driving shaft of the adjusting motor (31) being drivingly connected to the adjusting base (32);
a second brick pushing component (2), the second brick pushing component (2) being arranged opposite to the first brick pushing component (1) and moving synchronously with the first brick pushing component (1) in the same brick pushing transport direction;
the adjusting motor (31) driving the adjusting base (32) to slide so as to adjust a position of the limit block (33) and constrain a swing angle range of a first swing arm (11) of the first brick pushing component (1), so that the first brick pushing component (1) cooperates with the second brick pushing component (2) to push a brick body synchronously and accurately.

2. The brick pushing device according to claim 1, wherein the adjusting base (32) is further provided with a locking fixture, and the locking fixture is connected to the first brick pushing component (1).

3. The brick pushing device according to claim 1, further comprising a first transport mechanism (41), a second transport mechanism (42), a transmission shaft (43) and a power device (44), wherein the first transport mechanism (41) is drivingly connected with the second transport mechanism (42) through the transmission shaft (43), and the power device (44) is provided at an end of the transmission shaft (43); the first brick pushing component (1) is slidably connected on the first transport mechanism (41), and the second brick pushing component (2) is slidably connected on the second transport mechanism (42).

4. The brick pushing device according to claim 3, wherein the first brick pushing component (1) comprises a first power cylinder (12) and a first brick pushing base (13); a cylinder body of the first power cylinder (12) is hinged to the first brick pushing base (13), and a piston rod of the first power cylinder (12) is hinged to the first swing arm (11); a first brick-pushing claw (14) is provided on the first swing arm (11) to drive the first power cylinder (12) to perform a telescopic movement, so that the first brick-pushing claw (14) swings and pushes the brick body.

5. The brick pushing device according to claim 3, wherein the second brick pushing component (2) comprises a second power cylinder (22), a second brick pushing base (23), and a second swing arm (21) provided with a second brick-pushing claw (24); a cylinder body of the second power cylinder (22) is hinged to the second brick pushing base (23), and a piston rod of the second power cylinder (22) is hinged to the second swing arm (21) to drive the second power cylinder (22) to perform a telescopic movement, so that the second brick-pushing claw (24) swings and pushes the brick body.

6. The brick pushing device according to claim 4, wherein one end of the first swing arm (11) is provided with a first hinge end (111) hinged to the piston rod of the first power cylinder (12), and the first brick-pushing claw (14) is fixedly connected with the other end of the first swing arm (11); a second hinge end (112) is provided between the first hinge end (111) and the first brick-pushing claw (14), and the second hinge end (112) is hinged to the first brick pushing base (13).

7. The brick pushing device according to claim 5, wherein one end of the second swing arm (21) is provided with a third hinge end (211) hinged to the piston rod of the second power cylinder (22), and the second brick-pushing claw (24) is fixedly connected with the other end of the second swing arm (21); a fourth hinge end (212) is provided between the third hinge end (211) and the second brick-pushing claw (24), and the fourth hinge end (212) is hinged to the second brick pushing base (23).

8. The brick pushing device according to claim 4, wherein the first transport mechanism (41) comprises a first sliding base (411), a first driving wheel (412), a first driven wheel (413), and a first transmission belt (414) ; the first driving wheel (412) is connected with the first driven wheel (413) through the first transmission belt (414), and the first driving wheel (412) and the first driven wheel (413) are both assembled on the first sliding base (411); the first transmission belt (414) is fixedly connected on the first brick pushing base (13), and the first brick pushing base (13) is slidably connected on the first sliding base (411); the first driving wheel (412) is connected with the transmission shaft (43).

9. The brick pushing device according to claim 5, wherein the second transport mechanism (42) comprises a second sliding base (421), a second driving wheel (422), a second driven wheel (423), and a second transmission belt (424) ; the second driving wheel (422) is connected with the second driven wheel (423) through the second transmission belt (424), and the second driving wheel (422) and the second driven wheel (423) are both assembled on the second sliding base (421); the second transmission belt (424) is fixedly connected on the second brick pushing base (23), and the second brick pushing base (23) is slidably connected on the second sliding base (421); the second driving wheel (422) is connected with the transmission shaft (43).

10. An edge grinding machine, comprising the brick pushing device according to any one of claims 1 to 9.
